# EUROPÄISCHE PATENTANMELDUNG

(11) **EP 4 678 574 A1**
(43) Veröffentlichungstag der Anmeldung: **14.01.2026**
(21) Anmeldenummer: 24187021.1
(22) Anmeldetag: 08.07.2024
(51) Int. Cl.: B65G 69/28, B60R 25/102

(54) **ERKENNEN EINES LAUFENDEN ENT- UND/ODER BELADUNGSVORGANGS EINES TRANSPORTFAHRZEUGS**

(71) Anmelder: Schmitz Cargobull AG, 48341 Altenberge (DE)
(72) Erfinder: Weyring, Bernd, 48629 Metelen (DE); Buyting, Leander, 46397 Bocholt (DE); Kaup, Carsten, 48653 Coesfeld (DE)
(74) Vertreter: Cohausz & Florack

(57) **Zusammenfassung**

Es wird unter anderem ein Verfahren offenbart, wobei das Verfahren umfasst:
- Erfassen (301) einer Ladebrückenzustandsinformation, wobei die Ladebrückenzustandsinformation einen Zustand und/oder eine Zustandsänderung repräsentiert, der/die durch eine Sensoranordnung eines Transportfahrzeugs (2) erfasst wird/wurde und charakteristisch dafür ist, dass eine Ladebrücke (401) durch eine Hecköffnung (205) in einen Laderaum (201) des Transportfahrzeugs (2) zumindest teilweise eingebracht ist;
- Bestimmen (304), unter Berücksichtigung der Ladebrückenzustandsinformation, dass die Ladebrücke (401) durch die Hecköffnung (205) in den Laderaum (201) des Transportfahrzeugs (2) zumindest teilweise eingebracht ist;
- wenn bestimmt wird, dass die Ladebrücke (401) durch die Hecköffnung (205) in den Laderaum (201) des Transportfahrzeugs (2) zumindest teilweise eingebracht ist, (305, 306) (i) Benachrichtigen einer entfernten Vorrichtung und/oder (ii) Aktivieren eines Blockierens von Stützwinden des Transportfahrzeugs (2) und/oder (iii) Aktivieren eines Blockierens einer Höhenverstellung des Transportfahrzeugs (2) und/oder (iv) Aktivieren einer Anfahrvermeidungsfunktion.

## Beschreibung

### Gebiet

Beispielhafte Ausführungsformen der Erfindung betreffen Lösungen zum Erkennen eines laufenden Ent- und/oder Beladungsvorgangs eines Transportfahrzeugs, insbesondere zum Erkennen, ob/dass ein Ent- und/oder Beladungsvorgang eines Transportfahrzeugs läuft.

### Hintergrund

Im Stand der Technik kann es dazu kommen, dass ein laufender Ent- und/oder Beladungsvorgang eines Transportfahrzeugs unbeabsichtigt unterbrochen wird, beispielsweise wenn die Stützwinden des Transportfahrzeugs und/oder die Höhenverstellung des Transportfahrzeugs aktiviert werden und/oder das Transportfahrzeug trotz des laufenden Ent- und/oder Beladungsvorgangs angefahren wird. Auch ist für den Disponenten häufig nicht ersichtlich, ob aktuell ein Ent- und/oder Beladungsvorgang läuft.

### Zusammenfassung einiger beispielhafter Ausführungsformen der Erfindung

Eine Aufgabe der Erfindung ist es daher, die oben genannten Nachteile zu überwinden.

Gemäß der Erfindung wird ein Verfahren offenbart, wobei das Verfahren umfasst:
- Erfassen einer Ladebrückenzustandsinformation, wobei die Ladebrückenzustandsinformation einen Zustand und/oder eine Zustandsänderung repräsentiert, der/die durch eine Sensoranordnung eines Transportfahrzeugs erfasst wird/wurde und charakteristisch dafür ist, dass eine Ladebrücke durch eine Hecköffnung in einen Laderaum des Transportfahrzeugs zumindest teilweise eingebracht ist;
- Bestimmen, unter Berücksichtigung der Ladebrückenzustandsinformation, dass die Ladebrücke durch die Hecköffnung in den Laderaum des Transportfahrzeugs zumindest teilweise eingebracht ist;
- wenn bestimmt wird, dass die Ladebrücke durch die Hecköffnung in den Laderaum des Transportfahrzeugs zumindest teilweise eingebracht ist, (i) Benachrichtigen einer entfernten Vorrichtung und/oder (ii) Aktivieren eines Blockierens von Stützwinden des Transportfahrzeugs und/oder (iii) Aktivieren eines Blockierens einer Höhenverstellung des Transportfahrzeugs und/oder (iv) Aktivieren einer Anfahrvermeidungsfunktion.

Das offenbarte Verfahren wird beispielsweise durch eine Vorrichtung, zum Beispiel eine Steuereinheit für das Transportfahrzeug, insbesondere eine Telematikeinheit für das Transportfahrzeug, ausgeführt.

Dementsprechend wird gemäß der Erfindung ferner eine Vorrichtung offenbart, wobei die Vorrichtung Mittel eingerichtet zur Ausführung des offenbarten Verfahrens umfasst. Die offenbarte Vorrichtung ist beispielsweise das Transportfahrzeug oder ein Teil des Transportfahrzeugs.

Die Mittel können Hardware- und/oder Software-Komponenten umfassen. Die Mittel können beispielsweise mindestens einen Speicher mit Programmanweisungen eines Computerprogramms (z.B. des unten offenbarten Computerprogramms) und mindestens einen Prozessor ausgebildet zum Ausführen von Programmanweisungen aus dem mindestens einen Speicher umfassen. Dementsprechend soll auch eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren auszuführen. Es versteht sich, dass die offenbarte Vorrichtung auch andere nicht aufgeführte Mittel umfassen kann.

Ferner wird ein Computerprogramm offenbart, wobei das Computerprogramm Programmanweisungen umfasst, die dazu ausgebildet sind, bei Ausführung durch mindestens einen Prozessor eine Vorrichtung (z.B. die oben offenbarte Vorrichtung) zu veranlassen, das Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren, die offenbarte Vorrichtung und das offenbarte Computerprogramm dienen beispielsweise zum Erkennen eines laufenden Ent- und/oder Beladungsvorgang eines Transportfahrzeugs, insbesondere zum Erkennen (z.B. Bestimmen), ob/dass ein Ent- und/oder Beladungsvorgang eines Transportfahrzeugs läuft.

Im Folgenden werden die Eigenschaften des offenbarten Verfahrens (im Folgenden auch als "Verfahren" bezeichnet), der offenbarten Vorrichtung (im Folgenden auch als "Vorrichtung" bezeichnet) sowie des offenbarten Computerprogramms (im Folgenden auch als "Computerprogramm" bezeichnet) - teilweise beispielhaft - beschrieben. Es versteht sich, dass das Verfahren, die Vorrichtung und das Computerprogramm zueinander korrespondieren, so dass die Offenbarung eines Merkmals für eine dieser Kategorien als Offenbarung eines korrespondierenden Merkmals für die anderen Kategorien verstanden werden soll.

Unter einem Transportfahrzeug soll insbesondere (i) ein Nutzfahrzeuggespann oder (ii) ein Nutzfahrzeuganhänger, insbesondere ein Nutzfahrzeuganhänger für ein Straßenfahrzeug wie ein Starrdeichselanhänger oder ein Gelenkdeichselanhänger oder ein Sattelauflieger verstanden werden. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Der Nutzfahrzeuganhänger ist beispielsweise eingerichtet, mit einem Zugfahrzeug gekoppelt zu werden, um ein Nutzfahrzeuggespann mit dem Zugfahrzeug zu bilden. Zu diesem Zweck können der Nutzfahrzeuganhänger und das Zugfahrzeug beispielsweise jeweils zueinander korrespondierende Kopplungsmittel umfassen, die eingerichtet sind, um eine Verbindung (z.B. eine mechanische Verbindung und/oder elektrische Verbindung und/oder pneumatische Verbindung) zwischen dem Nutzfahrzeuganhänger und dem Zugfahrzeug herzustellen. Zum Beispiel umfassen die zueinander korrespondierenden Verbindungsmittel korrespondierende Teile eines Kupplungssystems wie einer Sattelkupplung, einer Bolzenkupplung oder einer Kugelkopfkupplung. Wenn das Zugfahrzeug mit dem Nutzfahrzeuganhänger (z.B. durch die oben offenbarten zueinander korrespondierenden Verbindungsmittel) verbunden ist, bilden das jeweilige Zugfahrzeug und der jeweilige Nutzfahrzeuganhänger beispielsweise ein Nutzfahrzeuggespann (z.B. einen Lastzug und/oder einen Sattelzug), so dass das jeweilige Zugfahrzeug den jeweiligen Nutzfahrzeuganhänger zieht.

Unter einer Information, die einen Zustand und/oder eine Zustandsänderung repräsentiert, der/die durch einen Sensor und/oder eine Sensoranordnung erfasst wird/wurde, soll eine Information verstanden werden, die den erfassten Zustand und/oder die erfasste Zustandsänderung qualitativ (z.B. indem sie angibt, dass der Zustand vorliegt oder die Zustandsänderung eingetreten ist) und/oder quantitativ (z.B. indem sie Messwerte angibt, die für den Zustand oder die Zustandsänderung charakteristisch sind) repräsentiert.

Unter dem Erfassen einer solchen Information soll beispielsweise verstanden werden, dass die Information (i) durch einen Sensor und/oder eine Sensoranordnung (z.B. eine Sensorvorrichtung), der/die Teil der Vorrichtung sein kann, die das Verfahren ausführt, erfasst wird und/oder (ii) von einem Sensor und/oder einer Sensoranordnung (z.B. eine Sensorvorrichtung), der/die die Information erfasst hat, erhalten (z.B. über einen Kommunikationspfad empfangen) wird.

Unter dem Erfassen eines Zustands und/oder einer Zustandsänderung, die charakteristisch dafür ist, dass ein bestimmter Zustand vorliegt, soll beispielsweise verstanden werden, dass eine Information erfasst wird, die (i) angibt, dass der bestimmte Zustand vorliegt (z.B. wenn durch eine Sensoranordnung und/oder einen Sensor erfasst wird/wurde, dass der bestimmte Zustand vorliegt und/oder, eine für das Erreichen des bestimmten Zustands hinreichender Zustand und/oder hinreichende Zustandsänderung erfasst wird/wurde), und/oder (ii) mit hoher Wahrscheinlichkeit darauf hindeutet, dass der Zustand vorliegt (z.B. wenn durch eine Sensoranordnung und/oder einen Sensor ein Zustand und/oder eine Zustandsänderung erfasst wird/wurde, die zum Erreichen des bestimmten Zustands notwendig ist).

Wie unten ausführlicher beschrieben wird, kann die Sensoranordnung des Transportfahrzeugs beispielsweise umfassen: (i) einen Erschütterungssensor, der eingerichtet ist, eine für das zumindest teilweise Einbringen der Ladebrücke charakteristische Erschütterung zu erfassen; und/oder (ii) einen Bildsensor, der eingerichtet ist, ein für das zumindest teilweise Einbringen der Ladebrücke charakteristisches Bild und/oder Bildmerkmal zu erfassen.

Unter einer Ladebrücke soll insbesondere eine Vorrichtung verstanden werden, die an einer Laderampe angeordnet ist und dazu dient, den Spalt zwischen Laderampe und dem Laderaum des Transportfahrzeugs während eines Ent- und/oder Beladungsvorgangs zu überbrücken. Zu diesem Zweck wird beispielsweise zumindest ein Ende der Ladebrücke durch die Hecköffnung in den Laderaum eingebracht und ein anderes Ende der Ladebrücke verbleibt auf/an der Laderampe, so dass der Bereich zwischen den beiden Enden der Ladebrücke den Spalt zwischen Laderampe und Laderaum des Transportfahrzeugs überbrückt. Dementsprechend soll unter dem zumindest teilweisen Einbringen der Ladebrücke verstanden werden, dass zumindest ein Ende der Ladebrücke durch die Hecköffnung in den Laderaum des Transportfahrzeugs eingebracht wird. Mit anderen Worten soll die Ladebrücke beispielsweise als zumindest teilweise durch die Hecköffnung in den Laderaum eingebracht verstanden werden, wenn die Ladebrücke durch die Hecköffnung ragt und sich ein Ende der Ladebrücke im Laderaum befindet. Zum Beispiel kann die Ladebrücke als Klappe ausgebildet sein, die, wenn sich das Transportfahrzeug an der Laderampe befindet, derart durch die Hecköffnung des Transportfahrzeugs in den Laderaum des Transportfahrzeugs klappbar ist, dass sie den Spalt zwischen der Laderampe und dem Laderaum des Transportfahrzeugs überbrückt. Hierbei kann es zu Erschütterungen kommen, die für das Ausklappen (d.h. das zumindest teilweise Einbringen) der Ladebrücke charakteristisch sind. Es versteht sich jedoch, dass die Erfindung nicht auf solche Ladebrücken beschränkt ist. Alternativ kann die Ladebrücke beispielsweise auch verschiebbar ausgebildet sein, so dass sie, wenn sich das Transportfahrzeug an der Laderampe befindet, durch die Hecköffnung des Transportfahrzeugs in den Laderaum des Transportfahrzeugs derart verschiebbar ist, dass sie durch die Hecköffnung ragt und sich ein Ende der Ladebrücke im Laderaum befindet (d.h. zumindest teilweise in den Laderaum eingebracht ist) und den Spalt zwischen der Laderampe und dem Laderaum des Transportfahrzeugs überbrückt. Das Verschieben (d.h. das zumindest teilweise Einbringen) der Ladebrücke kann beispielsweise durch einen Bildsensor erfasst werden.

Das Bestimmen, unter Berücksichtigung der Ladebrückenzustandsinformation, dass die Ladebrücke durch die Hecköffnung in den Laderaum des Transportfahrzeugs zumindest teilweise eingebracht ist, kann beispielsweise anhand vorgegebener Regeln (z.B. einem vorgegebenem Algorithmus) erfolgen. Die Regeln geben beispielsweise vor, unter welchen Voraussetzungen bestimmt wird, dass die Ladebrücke durch die Hecköffnung in den Laderaum des Transportfahrzeugs zumindest teilweise eingebracht ist.

Zum Beispiel können die Regeln vorsehen, dass eine Bedingung dafür, dass bestimmt wird, dass die Ladebrücke durch die Hecköffnung in den Laderaum des Transportfahrzeugs zumindest teilweise eingebracht ist, ist, dass der durch Ladebrückenzustandsinformation repräsentierte Zustand und/oder die dadurch repräsentierte Zustandsänderung charakteristisch dafür ist (z.B. angibt oder mit hoher Wahrscheinlichkeit darauf hindeutet), dass die Ladebrücke durch die Hecköffnung in den Laderaum des Transportfahrzeugs zumindest teilweise eingebracht ist.

Dass das Bestimmen unter Berücksichtigung der Ladebrückenzustandsinformation erfolgt, soll derart verstanden werden, dass zumindest diese Information beim Bestimmen berücksichtigt wird. Dies schließt jedoch nicht aus, dass noch weitere Informationen beim Bestimmen berücksichtigt werden können. Zum Beispiel können die Regeln vorsehen, dass neben der Ladebrückenzustandsinformation noch weitere Informationen bei dem Bestimmen berücksichtigt werden können/müssen.

Wenn bestimmt wird, dass die Ladebrücke durch die Hecköffnung in den Laderaum des Transportfahrzeugs zumindest teilweise eingebracht ist, wird zumindest eine der folgenden Aktionen ausgeführt: (i) Benachrichtigen einer entfernten Vorrichtung und/oder (ii) Aktivieren eines Blockierens von Stützwinden des Transportfahrzeugs und/oder (iii) Aktivieren eines Blockierens einer Höhenverstellung des Transportfahrzeugs und/oder (iv) Aktivieren einer Anfahrvermeidungsfunktion.

Bei dem Blockieren von Stützwinden und/oder einer Höhenverstellung und/oder der Anfahrvermeidungsfunktion handelt es sich beispielsweise um Funktionen des Transportfahrzeugs. Das Blockieren der Stützwinden und/oder der Höhenverstellung ist beispielsweise eingerichtet, eine Verwendung der Stützwinden und/oder der Höhenverstellung zu verhindern, solange das Blockieren der Stützwinden und/oder der Höhenverstellung aktiviert ist. Die Anfahrvermeidungsfunktion ist beispielsweise eingerichtet, ein unbeabsichtigtes Anfahren des Transportfahrzeugs zu vermeiden, indem sie beispielsweise das Weiterfahren verhindert und/oder versucht die Aufmerksamkeit des Fahrers zu erregen, falls das Transportfahrzeug in Bewegung gesetzt wird.

Das Benachrichtigen der entfernten Vorrichtung kann beispielsweise das Senden oder das Veranlassen des Sendens einer Nachricht an die entfernte Vorrichtung umfassen. Die entfernte Vorrichtung kann beispielsweise ein Server sein; und die Nachricht kann beispielsweise über einen drahtlosen Kommunikationspfad an den Server gesendet werden.

Das zumindest teilweise Einbringen der Ladebrücke durch die Hecköffnung in den Laderaum des Transportfahrzeugs ist charakteristisch für einen laufenden Ent- und/oder Beladungsvorgang des Transportfahrzeugs. Wenn bestimmt wird, dass die Ladebrücke durch die Hecköffnung in den Laderaum des Transportfahrzeugs zumindest teilweise eingebracht ist, soll dies beispielsweise als Erkennen eines laufenden Ent- und/oder Beladungsvorgang des Transportfahrzeugs verstanden werden. Um einen solchen laufenden Ladevorgang nicht zu stören und/oder zu unterbrechen, kann es vorteilhaft sein, die Stützwinden des Transportfahrzeugs und/oder die Höhenverstellung des Transportfahrzeugs zu blockieren und/oder das Anfahren des Transportfahrzeugs zu vermeiden. Durch das Benachrichtigen der entfernten Vorrichtung, kann diese (und somit beispielsweise ein Disponent) darüber informiert werden, dass die Ladebrücke durch die Hecköffnung in den Laderaum des Transportfahrzeugs zumindest teilweise eingebracht ist und/oder dass ein Ent- und/oder Beladungsvorgang läuft.

Die Erfindung stellt somit eine Lösung bereit, die es ermöglicht einen laufenden Ent- und/oder Beladungsvorgang zu erkennen sowie eine entfernte Vorrichtung entsprechend zu benachrichtigen und/oder ein unbeabsichtigtes Unterbrechen oder Stören des Ladevorgangs zu vermeiden.

Weitere Vorteile der offenbarten Erfindung werden nachfolgend anhand beispielhafter Ausführungsformen des offenbarten Verfahrens, des offenbarten Computerprogramms und der offenbarten Vorrichtung beschrieben.

In beispielhaften Ausführungsformen ist die Ladebrücke eingerichtet, um durch die Hecköffnung in den Laderaum des Transportfahrzeugs zumindest teilweise eingebracht, insbesondere ausgeklappt und/oder ausgefahren, zu werden.

In beispielhaften Ausführungsformen umfasst die Sensoranordnung des Transportfahrzeugs (d.h. die
Sensoranordnung, die den/die durch die Ladebrückenzustandsinformation repräsentierten Zustand
und/oder Zustandsänderung erfasst) zumindest einen der folgenden Sensoren:
   - einen Erschütterungssensor; und/oder
   - einen Bildsensor; und/oder
   - eine Lichtschrankenanordnung; und/oder
   - einen Gewichtssensor; und/oder
   - einen Kontakt- und/oder Näherungssensor.

Der Erschütterungssensor ist beispielsweise eingerichtet, eine für das zumindest teilweise Einbringen der Ladebrücke charakteristische Erschütterung zu erfassen. Ein Beispiel für einen solchen Erschütterungssensor ist ein Vibrationssensor.

Der Bildsensor ist beispielsweise eingerichtet, ein für das zumindest teilweise Einbringen der Ladebrücke charakteristisches Bild und/oder Bildmerkmal zu erfassen. Ein Beispiel für einen solchen Bildsensor ist eine Kamera, zum Beispiel eine im Laderaum angeordnete Kamera.

Die Lichtschrankenanordnung ist beispielsweise derart eingerichtet, dass die Lichtschranke unterbrochen wird, wenn die Ladebrücke zumindest teilweise in den Laderaum eingebracht wird, z.B. wird die Lichtschranke durch die Ladebrücke unterbrochen, wenn die Ladebrücke eine vorgegebene Endposition im Laderaum erreicht hat.

Der Gewichtssensor ist beispielsweise eingerichtet, ein durch das zumindest teilweise Einbringen der Ladebrücke in den Laderaum zusätzliches Gewicht zu erfassen. Ein Beispiel für einen solchen Gewichtssensor ist ein Ladegewichtssensor und/oder ein Achslastsensor.

Der Kontakt- und/oder Näherungssensor ist beispielsweise eingerichtet, einen Kontakt und/oder eine Annäherung zu erfassen, wenn die Ladebrücke eine vorgegebene Endposition im Laderaum erreicht hat. Ein Beispiel für einen solchen Kontakt- und/oder Näherungssensor ist ein Reedsensor oder ein induktiver Sensor.

Jeder dieser Sensoren ermöglicht es somit, einen Zustand und/oder eine Zustandsänderung zu erfassen, die einen Rückschluss darauf zulässt, ob die Ladebrücke zumindest teilweise in den Laderaum eingebracht sein könnte. Es versteht sich, dass diese Zustände und/oder Zustandsänderungen zumindest teilweise auch dann erfasst werden können, wenn die Ladebrücke nicht in den Laderaum eingebracht ist. Mit anderen Worten sind die Zustände und/oder Zustandsänderungen zumindest teilweise notwendig, aber nicht hinreichend dafür, dass die Ladebrücke in den Laderaum eingebracht ist. Zum Beispiel kann eine Erschütterung auch aus anderen Gründen auftreten und/oder eine Lichtschranke aus anderen Gründen unterbrochen werden. Allerdings ist es wahrscheinlicher, dass die Ladebrücke in den Laderaum eingebracht ist, wenn mehrere dieser Zustände und/oder Zustandsänderungen erfasst wurden/werden. Um die Genauigkeit zu erhöhen, kann es deshalb vorteilhaft sein, wenn die Sensoranordnung mehrere Sensoren (z.B. mehrere der genannten Sensoren) umfasst.

Dementsprechend kann die Ladebrückenzustandsinformation umfassen: (i) eine Gewichtsinformation, die ein durch den Gewichtssensor erfasstes Gewicht und/oder eine erfasste Veränderung des Gewichts repräsentiert, und/oder (ii) eine Bildinformation, die ein durch den Bildsensor erfasstes Bild repräsentiert, und/oder (iii) eine Erschütterungsinformation, die eine durch den Erschütterungssensor erfasste Erschütterung repräsentiert, und/oder (iv) eine Lichtschrankeninformation, die einen Zustand der Lichtschranke (z.B. "unterbrochen" oder "nicht unterbrochen") repräsentiert, und/oder (v) eine Kontakt- und/oder Annäherungsinformation, die eine(n) durch den Kontakt- und/oder Näherungssensor erfassten Kontakt und/oder Annäherung repräsentiert.

In beispielhaften Ausführungsformen umfasst das Verfahren ferner:
- Erfassen einer Rückwärtsbewegungsinformation, die eine durch einen Bewegungssensor des Transportfahrzeugs erfasste Rückwärtsbewegung des Transportfahrzeugs repräsentiert; und/oder
- Erfassen einer Verzögerungsinformation, die eine durch den Bewegungssensor des Transportfahrzeugs erfasste Verzögerung des Transportfahrzeugs, insbesondere eine Verzögerung bis zum Stillstand, repräsentiert; und/oder
- Erfassen einer Stillstandinformation, die einen durch den Bewegungssensor des Transportfahrzeugs erfassten Stillstand des Transportfahrzeug stillsteht, repräsentiert; und/oder
- Erfassen einer Öffnungsinformation, die eine durch einen Öffnungssensor des Transportfahrzeugs erfasste Öffnung eines die Hecköffnung verschließenden Verschlussmittels, insbesondere einer Hecktür und/oder eines Heckrolltors, des Transportfahrzeugs repräsentiert; und/oder
- Erfassen einer Positionsinformation, die eine durch einen Positionssensor des Transportfahrzeugs erfasste Position des Transportfahrzeugs repräsentiert; und/oder
- Erfassen einer Annäherungsinformation, die eine durch einen Näherungssensor des Transportfahrzeug, erfasste Annäherung eines Hecks des Transportfahrzeugs an eine Laderampe repräsentiert.

Ein Beispiel für den Bewegungssensor ist ein Beschleunigungssensor. Ein solcher Beschleunigungssensor kann beispielsweise eingerichtet sein, eine Rückwärtsbewegung und/oder eine Verzögerung und/oder einen Stillstand des Transportfahrzeugs zu erfassen. Ein solcher Beschleunigungssensor kann beispielsweise Teil des Bremssystems und/oder der Telematikeinheit des Transportfahrzeugs sein.

Der Öffnungssensor ist beispielsweise eingerichtet, zu erfassen, (i) ob die Hecköffnung durch das Verschlussmittel verschlossen ist und/oder (ii) ob die Hecköffnung durch das Verschlussmittel nicht verschlossen ist. In diesem Beispiel soll die Öffnung des die Hecköffnung verschließenden Verschlussmittels als erfasst verstanden werden, (i) wenn der Sensor nicht erfasst, dass die Hecköffnung durch das Verschlussmittel verschlossen ist, und/oder (ii) wenn der Sensor erfasst, dass die Hecköffnung durch das Verschlussmittel nicht verschlossen ist. Wenn das Verschlussmittel eine Hecktür und/oder ein Heckrolltor ist, kann der Sensor beispielsweise als Türöffnungssensor (z.B. ein Türkontaktschalter) und/oder Toröffnungssensor (z.B. ein Torkontaktschalter) ausgebildet sein.

Unter einem Positionssensor soll beispielsweise ein Sensor eines Globalen-Satelliten-Navigationssystems verstanden werden, der eingerichtet ist, eine Position basierend auf erfassten Navigationssignalen des Globalen-Satelliten-Navigationssystems zu bestimmen. Ein Beispiel für einen solchen Positionssensor ist ein GPS-Sensor (Global Positioning System- Sensor). Der Positionssensor kann beispielsweise Teil eines Navigationssystems und/oder Teil der Telematikeinheit des Transportfahrzeugs sein.

Der Näherungssensor ist beispielsweise am Heck des Transportfahrzeugs angeordnet.

Zum Beispiel ist der Näherungssensor als Abstandssensor ausgebildet, der eingerichtet ist, einen Abstand zwischen dem Heck des Transportfahrzeugs und einem Objekt in der Umgebung des Transportfahrzeugs zu erfassen. In diesem Beispiel soll die Annäherung des Hecks des Transportfahrzeugs an die Laderampe beispielsweise als erfasst verstanden werden, wenn der durch den Abstandssensor erfasste Abstand geringer als ein vorgegebener Schwellwert (z.B. 30 cm, oder 20 cm, oder 10 cm) ist. Ein Beispiel für einen solchen Abstandssensor ist ein Parksensor.

Alternativ ist der Näherungssensor beispielsweise eingerichtet, ein Anstoßen des Hecks des Transportfahrzeugs an einem Objekt in der Umgebung des Transportfahrzeugs zu erfassen. Zum Beispiel ist der Näherungssensor zu diesem Zweck als Erschütterungssensor ausgebildet, der eingerichtet ist, eine Erschütterung aufgrund eines Anstoßens des Hecks des Transportfahrzeugs an die Laderampe zu erfassen.

Zum Beispiel erfolgt das Bestimmen, dass die Ladebrücke durch die Hecköffnung in den Laderaum des Transportfahrzeugs zumindest teilweise eingebracht ist, unter Berücksichtigung (i) der Rückwärtsbewegungsinformation und/oder (ii) der Verzögerungsinformation und/oder (iii) der Stillstandinformation und/oder (iv) der Öffnungsinformation und/oder (v) der Positionsinformation und/oder (vi) der Annäherungsinformation.

Diese Informationen bzw. Zustände und/oder Zustandsänderungen können im Zusammenhang mit dem Einbringen der Ladebrücke in den Laderaum des Transportfahrzeugs auftreten, so dass sie einen Rückschluss darauf zulassen, ob die Ladebrücke zumindest teilweise in den Laderaum eingebracht sein könnte. So tritt eine Rückwärtsbewegung des Transportfahrzeugs mit Verzögerung bis zum Stillstand und eine Annäherung des Hecks des Transportfahrzeugs an ein Objekt in der Umgebung auf, wenn das Transportfahrzeug (z.B. rückwärts) an die Laderampe rangiert. Anschließend wird das die Hecköffnung verschließenden Verschlussmittel geöffnet, um die Ladebrücke in den Laderaum einbringen zu können. Auch eine Position an oder in der Nähe einer Laderampe ist notwendig dafür, dass ein Ladebrücke in den Laderaum des Transportfahrzeugs eingebracht ist. Es versteht sich, dass diese Zustände und/oder Zustandsänderungen zumindest teilweise auch dann erfasst werden können, wenn die Ladebrücke nicht in den Laderaum eingebracht ist. Mit anderen Worten sind die Zustände und/oder Zustandsänderungen zumindest teilweise notwendig, aber nicht hinreichend dafür, dass die Ladebrücke in den Laderaum eingebracht ist. Zum Beispiel kann eine Rückwärtsbewegung des Transportfahrzeugs mit Verzögerung bis zum Stillstand und eine Annäherung des Hecks des Transportfahrzeugs an ein Objekt in der Umgebung auch in anderen Zusammenhängen wie dem Abstellen des Transportfahrzeugs auf einem Parkplatz auftreten. Allerdings ist es wahrscheinlicher, dass die Ladebrücke in den Laderaum eingebracht ist, wenn mehrere dieser Zustände und/oder Zustandsänderungen erfasst wurden/werden (z.B. zum selben Zeitpunkt und/oder in derselben Zeitspanne, die beispielsweise eine vorgegebene Länge hat wie innerhalb der letzten 10 min oder der letzten 5 min oder der letzten 3 min oder der letzten 2 min oder der letzten 1 min oder der letzten 30 sec). Um die Genauigkeit zu erhöhen, kann es deshalb vorteilhaft sein, wenn das Bestimmen, dass die Ladebrücke durch die Hecköffnung in den Laderaum des Transportfahrzeugs zumindest teilweise eingebracht ist, unter Berücksichtigung einer oder mehrerer dieser Informationen stattfindet.

In beispielhaften Ausführungsformen wird das Bestimmen, dass die Ladebrücke durch die Hecköffnung in den Laderaum des Transportfahrzeugs zumindest teilweise eingebracht ist, durch eine Steuereinheit, insbesondere eine Telematikeinheit, des Transportfahrzeugs durchgeführt.

In beispielhaften Ausführungsformen umfasst die Benachrichtigung der entfernten Vorrichtung:
- Senden einer Nachricht über einen drahtlosen Kommunikationspfad an die entfernte Vorrichtung.

Zum Beispiel enthält und/oder repräsentiert die Nachricht eine Angabe, dass die Ladebrücke durch die Hecköffnung in den Laderaum des Transportfahrzeugs zumindest teilweise eingebracht ist.

In beispielhaften Ausführungsformen umfasst die Anfahrvermeidungsfunktion:
- Erfassen eines Zustands und/oder einer Zustandsänderung, der/die charakteristisch für (i) ein Anfahren des Transportfahrzeugs und/oder (ii) ein bevorstehendes Anfahren des Transportfahrzeugs ist;
- wenn ein Zustand und/oder eine Zustandsänderung erfasst wird, der/die charakteristisch für (i) ein Anfahren des Transportfahrzeugs und/oder (ii) ein bevorstehendes Anfahren des Transportfahrzeug ist, Bewirken einer Anfahrvermeidungsaktion.

Unter dem Erfassen eines Zustands und/oder einer Zustandsänderung, der/die charakteristisch für (i) ein Anfahren des Transportfahrzeugs ist, soll beispielsweise verstanden werden, dass ein Bewegungssensor (z.B. ein Beschleunigungssensor) erfasst, dass sich das Transportfahrzeug bewegt (z.B. in Fahrtrichtung und/oder Vorwärtsrichtung beschleunigt wird).

Unter dem Erfassen eines Zustands und/oder einer Zustandsänderung, der/die charakteristisch für ein bevorstehendes Anfahren des Transportfahrzeugs ist; soll beispielsweise verstanden werden, dass ein Starten des Motors des Transportfahrzeugs und/oder ein Einlegen eines Gangs (z.B. eines Vorwärtsgangs) erfasst wird (z.B. durch eine Steuereinheit wie eine Motorsteuereinheit und/oder eine Getriebesteuereinheit des Transportfahrzeugs).

Zum Beispiel umfasst die Anfahrvermeidungsaktion:
- eine Bremsaktion; und/oder
- eine Warnaktion.

Zum Beispiel umfasst die Bremsaktion zumindest ein Abbremsen von Rädern (z.B. einiger oder aller Räder) des Transportfahrzeugs wie ein dauerhaftes Blockieren und/oder ein ein- oder mehrmaliges Abbremsen (z.B. in Form einer Teillastbremsung und/oder Stotterbremsung) von Rädern des Transportfahrzeugs.

Beispielsweise umfasst die Warnaktion ein Ausgeben eines Warnsignals wie ein Anzeigen einer Warnung auf einem Bildschirm des Transportfahrzeugs und/oder das Ausgeben eines optischen und/oder akustischen Warnsignals des Transportfahrzeugs.

Sowohl bei der Bremsaktion als auch bei der Warnaktion kann es sich jeweils um eine Betriebsfunktion des Transportfahrzeugs handeln. Die Bremsaktion umfasst beispielsweise das Aktivieren einer Bremsfunktion des Transportfahrzeugs; und die Warnaktion umfasst beispielsweise das Aktivieren einer Warnfunktion des Transportfahrzeugs.

Zum Beispiel bewirkt die Bremsfunktion, wenn sie aktiviert wird, ein (z.B. dauerhaftes) Blockieren von Rädern des Transportfahrzeugs. Zu diesem Zweck (1) umfasst die Bremsfunktion beispielsweise die Feststellbremse und/oder die Betriebsbremse des Transportfahrzeugs und/oder (2) steuert die Feststellbremse und/oder die Betriebsbremse des Transportfahrzeugs. Durch das Blockieren der Räder wird ein Anfahren des Transportfahrzeugs verhindert.

Alternativ oder zusätzlich kann die Bremsfunktion ein Abbremsen von Rädern des Transportfahrzeugs bewirken, wenn sie aktiviert wird. Zum Beispiel können die Räder des Transportfahrzeugs einmalig oder mehrmalig abgebremst werden (z.B. in Form einer Teillastbremsung und/oder Stotterbremsung), wenn das Transportfahrzeug bewegt wird, während die Anfahrvermeidungsfunktion aktiviert ist. Zu diesem Zweck (1) umfasst die Bremsfunktion beispielsweise die Betriebsbremse des Transportfahrzeugs und/oder (2) steuert die Betriebsbremse des Transportfahrzeugs. Durch das Abbremsen soll die Aufmerksamkeit des Fahrers erregt werden, um ein unbeabsichtigtes Anfahren des Transportfahrzeugs zu vermeiden.

Die Warnfunktion kann bewirken, dass eine Warnung auf einem Bildschirm des Transportfahrzeugs angezeigt wird, wenn sie aktiviert wird. Zu diesem Zweck (1) umfasst die Warnfunktion beispielsweise den Bildschirm des Transportfahrzeugs und/oder (2) steuert den Bildschirm des Transportfahrzeugs. Durch das Anzeigen der Warnung soll die Aufmerksamkeit des Fahrers erregt werden, um ein unbeabsichtigtes Anfahren des Transportfahrzeugs zu vermeiden.

Die Warnfunktion kann alternativ oder zusätzlich ein Warnsignal des Transportfahrzeugs aktivieren, wenn sie aktiviert wird. Bei dem Warnsignal kann es sich beispielsweise um ein optisches und/oder akustisches Warnsignal handeln. Durch das Warnsignal soll ähnlich wie durch das Abbremsen die Aufmerksamkeit des Fahrers erregt werden, um ein unbeabsichtigtes Anfahren des Transportfahrzeugs zu vermeiden.

In beispielhaften Ausführungsformen ist das Transportfahrzeug eines der folgenden Fahrzeuge:
(i) ein Nutzfahrzeuggespann umfassend ein Zugfahrzeug und einen Nutzfahrzeuganhänger,
(ii) ein Nutzfahrzeuganhänger, insbesondere ein Sattelauflieger.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Detaillierte Beschreibung einiger beispielhafter Ausführungsformen

Es zeigen:
- Fig. 1: eine schematische Darstellung einer beispielhaften Ausführungsform einer Vorrichtung gemäß der Erfindung;
- Fig. 2: eine schematische Darstellung einer beispielhaften Ausführungsform eines Transportfahrzeugs gemäß der Erfindung; und
- Fig. 3: ein Flussdiagramm einer Ausführungsform eines Verfahrens gemäß der Erfindung

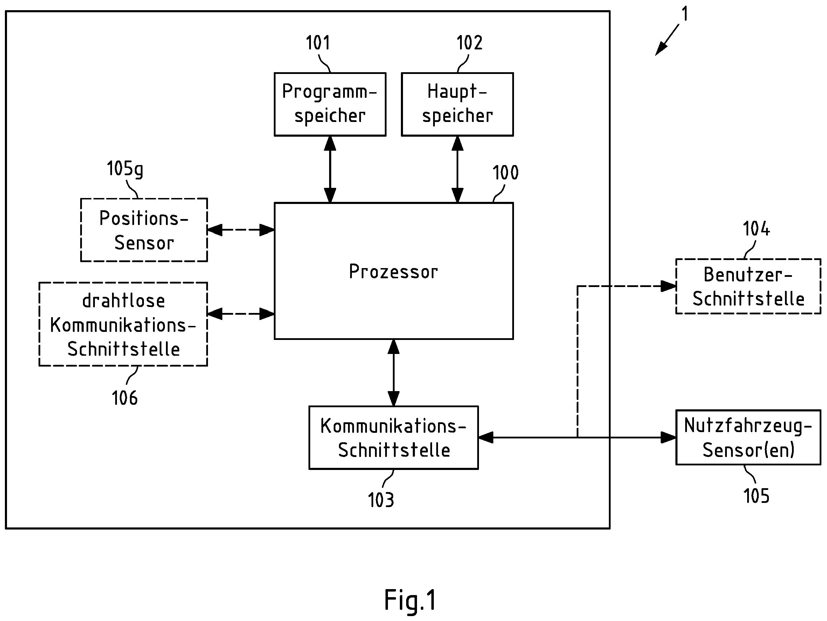

Fig. 1 zeigt eine schematische Darstellung einer Ausführungsform einer Vorrichtung 1 gemäß der Erfindung. Im Folgenden wird davon ausgegangen, dass die Vorrichtung 1 Teil eines Transportfahrzeugs in Form eines Nutzfahrzeuganhängers ist. Zum Beispiel kann die Vorrichtung 1 eine Steuereinheit und/oder Telematikeinheit des Nutzfahrzeuganhängers sein.

Die Vorrichtung 1 umfasst einen Prozessor 100 und verbunden mit dem Prozessor 100 einen ersten Speicher als Programmspeicher 101, einen zweiten Speicher als Hauptspeicher 102 und eine Kommunikationsschnittstelle 103.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Vorrichtung 1 auch mehrere Prozessoren 100 umfassen kann.

Der Prozessor 100 führt Programmanweisungen aus, die in Programmspeicher 101 gespeichert sind, und speichert beispielsweise Zwischenergebnisse oder Ähnliches in Hauptspeicher 102.

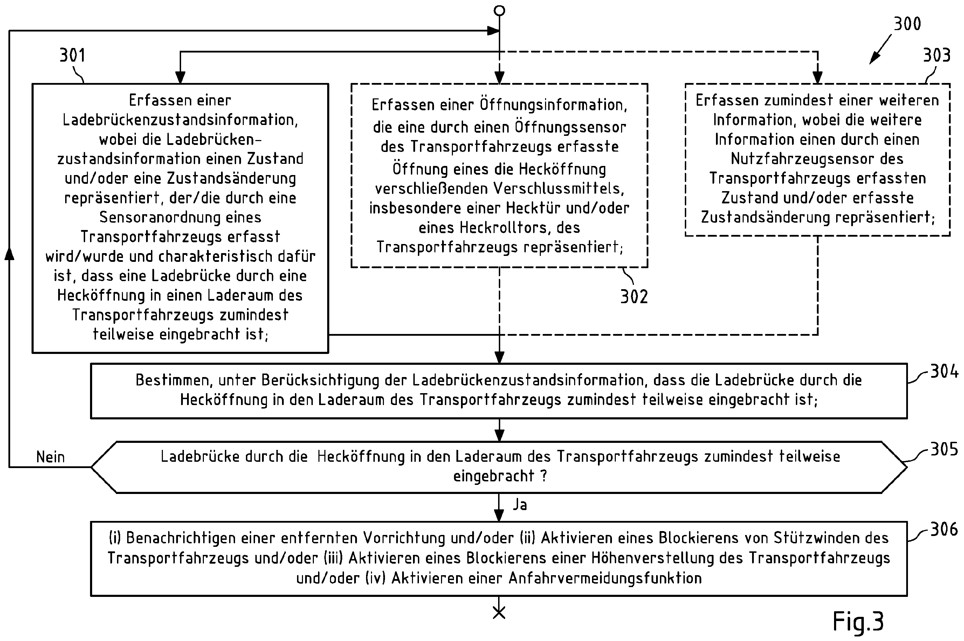

In dem Programmspeicher 101 sind beispielsweise Programmanweisungen gespeichert, die den Prozessor 100, wenn er die Programmanweisungen ausführt, veranlassen, das Verfahren gemäß der Erfindung (z.B. das Verfahren gemäß dem in Fig. 3 dargestellten Flussdiagramm 3) zumindest teilweise auszuführen und/oder zu steuern.

Der Programmspeicher 101 enthält ferner beispielsweise das Betriebssystem der Vorrichtung 1, das beim Starten der Vorrichtung 1 zumindest teilweise in Hauptspeicher 102 geladen und vom Prozessor 100 ausgeführt wird. Insbesondere wird beim Starten der Vorrichtung 1 zumindest ein Teil des Kerns des Betriebssystems in den Hauptspeicher 102 geladen und vom Prozessor 100 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Hauptspeicher 102 und der Programmspeicher 101 können auch als ein Speicher ausgebildet sein. Alternativ können der Hauptspeicher 102 und/oder der Programmspeicher 101 jeweils durch mehrere Speicher gebildet werden. Ferner können der Hauptspeicher 102 und/oder der Programmspeicher 101 auch Teil des Prozessors 100 sein.

Der Prozessor 100 steuert die Kommunikationsschnittstelle 103, welche beispielsweise eingerichtet ist, Informationen mit anderen Komponenten des Nutzfahrzeuganhängers auszutauschen (z.B. zu senden und/oder zu empfangen). Die Kommunikationsschnittstelle 103 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit der optionalen Benutzerschnittstelle 104 und/oder einem oder mehreren Sensoren 105 des Nutzfahrzeuganhängers über ein Ethernet-Netzwerk oder ein CAN-, K-Leitungs-, LIN- oder Flexray-Bussystem des Nutzfahrzeuganhängers. Zum Beispiel kann die Vorrichtung 1 durch die Kommunikationsschnittstelle 103 Informationen an die Benutzerschnittstelle 104 und/oder Sensoren 105 senden und/oder von diesen empfangen. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In Fig. 1 sind die Benutzerschnittstelle 104 und die Sensoren 105 nicht als Teil der Vorrichtung 1 dargestellt. Es versteht sich jedoch, dass die Benutzerschnittstelle 104 und/oder die Sensoren 105 auch vollständig oder teilweise Teil der Vorrichtung 1 sein kann/können, insbesondere dann, wenn die Vorrichtung 1 der Nutzfahrzeuganhänger ist sowie die Benutzerschnittstelle 104 und/oder die Sensoren 105 Teil des Nutzfahrzeuganhängers ist/sind.

Eine Benutzerschnittstelle 104 ist beispielsweise eingerichtet, eine Information in Form einer Benutzereingabe zu erfassen und/oder eine Information an einen Benutzer auszugeben. Zum Beispiel ist die Benutzerschnittstelle 104 eine Tastatur, ein Bildschirm, ein berührungsempfindlicher Bildschirm, ein Lautsprecher, eine Hupe und/oder ein Mikrofon. Die Benutzerschnittstelle 104 ist beispielsweise Teil des Nutzfahrzeuganhängers oder eines mit dem Nutzfahrzeuganhänger gekoppelten Zugfahrzeugs.

Beispiele für die Sensoren 105 sind ein Türöffnungssensor 105a und/oder ein Ladegewichtssensor 105b und/oder eine Kamera 105c und/oder ein Erschütterungssensor 105d und/oder ein Bewegungssensor 105e und/oder ein Abstandssensor 105f.

Die Nutzfahrzeugsensoren 105 können zumindest teilweise Teil des Nutzfahrzeuganhängers und/oder Teil eines mit dem Nutzfahrzeuganhänger gekoppelten Zugfahrzeugs sein.

Ferner weist die Vorrichtung 1 eine durch den Prozessor 100 gesteuerte optionale drahtlose Kommunikationsschnittstelle 106 auf, über welche Informationen über einen drahtlosen Kommunikationspfad mit einer entfernten Vorrichtung ausgetauscht (z.B. gesendet und/oder empfangen) werden können. Die drahtlose Kommunikationsschnittstelle 106 ist beispielsweise als Bluetooth-, WLAN-, und/oder Mobilfunk-Kommunikationsschnittstelle ausgebildet. Die Bluetooth-Spezifikationen sind derzeit im Internet unter www.bluetooth.org erhältlich. WLAN ist in den Standards der IEEE 802.1 1-Familie standardisiert, die derzeit im Internet unter https://www.ieee.org abgerufen werden können. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können derzeit im Internet unter https://www.3gpp.org/ abgerufen werden.

Die Komponenten 100 bis 103 und 106 der Vorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den dargestellten Komponenten weitere Komponenten umfassen kann.

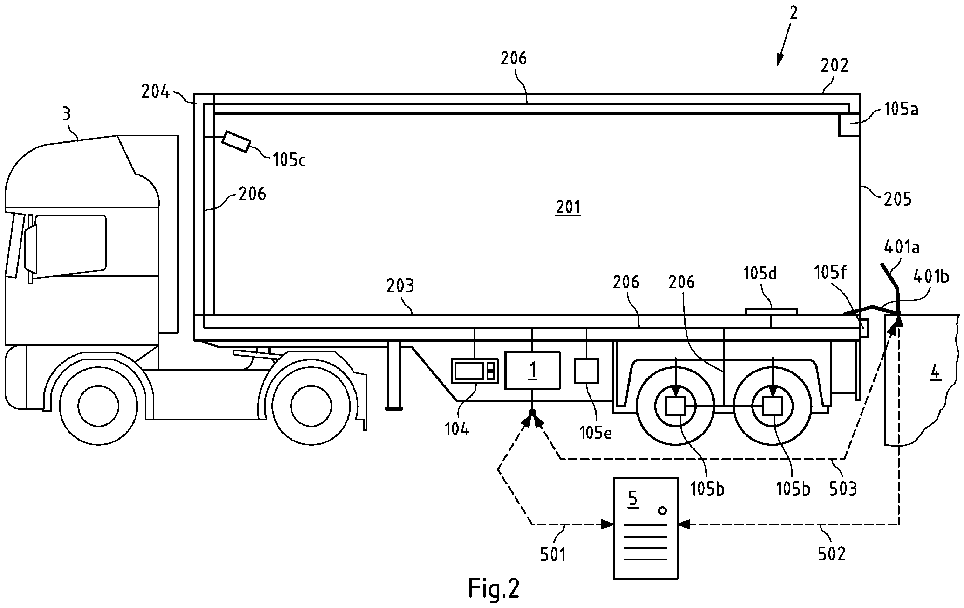

Fig. 2 zeigt eine schematische Darstellung einer beispielhaften Ausführungsform eines Nutzfahrzeuganhängers 2 als Teil eines Zuggespanns mit einem Zugfahrzeug 3 gemäß der Erfindung. Der Nutzfahrzeuganhänger 2 ist ein Sattelauflieger. In dem Sattelauflieger 2 ist eine Vorrichtung 1 angeordnet. Im Folgenden wird beispielhaft davon ausgegangen, dass diese Vorrichtung 1 der in Fig. 1 dargestellten Vorrichtung 1 entspricht. Ferner ist in Fig. 2 eine Laderampe 4 mit einer klappbaren Ladebrücke 401 und eine entfernte Vorrichtung in Form eines Servers 5 dargestellt.

Im Folgenden wird die beispielhafte Ausführungsform des Sattelaufliegers 2 anhand von Fig. 2 erläutert. Der Sattelauflieger 2 umfasst einen Laderaum 201. Der Laderaum 201 des Sattelaufliegers 2 wird oben durch das Laderaumdach 202 und unten durch den Laderaumboden 203 begrenzt. Ferner wird der Laderaum durch die Stirnwand 204 und die verschließbare Hecköffnung 205 sowie nicht dargestellte seitliche Begrenzungsflächen (z.B. Seitenplanen begrenzt). Die Hecköffnung 205 wird durch eine nicht dargestellte Hecktür, zum Beispiel eine Doppelflügeltür gebildet. An der Hecktür 205 kann ein Türöffnungssensor 105a (z.B. ein Türkontaktschalter) angeordnet sein, der eingerichtet ist, um zu erfassen, ob die Hecktür geöffnet oder geschlossen ist, und eine Öffnungsinformation, die repräsentiert (z.B. angibt), ob erfasst wurde, dass die Hecktür geöffnet oder geschlossen ist, über die Verbindung 206 an die Vorrichtung 1 zu senden.

Die Ladebrücke 401 ist derart ausgebildet, dass sie, wenn sie entsprechend angesteuert wird, sich selbsttätig ausklappen kann, um sich zumindest teilweise durch die Hecköffnung 205 in den Laderaum 201 des Sattelaufliegers 2 einzubringen. In Fig. 2 ist die Ladebrücke 401 einmal in der eingeklappten Stellung mit dem Bezugszeichen 401a und einmal in der ausgeklappten Stellung mit dem Bezugszeichen 401b dargestellt. In der ausgeklappten Stellung 401b soll die Ladebrücke 401 als zumindest teilweise durch die Hecköffnung 205 in den Laderaum 201 des Sattelaufliegers 2 eingebracht verstanden werden. In dieser ausgeklappten Stellung 401b dient die Ladebrücke 401 dazu, den Spalt zwischen der Laderampe 4 und dem Laderaum 201 des Sattelaufliegers 2 während eines Ent- und/oder Beladungsvorgangs zu überbrücken, so dass der Laderaum 201 über die Ladebrücke 401 von der Laderampe 4 aus befahren und/oder betreten werden kann. In der eingeklappten Stellung 401a soll die Ladebrücke 401 dagegen nicht als zumindest teilweise durch die Hecköffnung 205 in den Laderaum 201 des Sattelaufliegers 2 eingebracht verstanden werden.

Der Sattelauflieger 2 umfasst Ladegewichtssensoren 105b (z.B. als Achslastsensoren), die jeweils eingerichtet sind, das auf der jeweiligen Achse des Sattelaufliegers 2 lastende Gewicht (hier beispielhaft symbolisiert durch die Pfeile) zu erfassen und eine Ladegewichtsinformation, die ein erfasstes Gewicht der Beladung des Sattelaufliegers 2 und/oder eine erfasste Veränderung des Gewichts der Beladung des Sattelaufliegers 2 repräsentiert, über die Verbindung 206 an die Vorrichtung 1 zu senden. Zum Beispiel können die Ladegewichtssensoren 105b eingerichtet sein, ein durch das zumindest teilweise Einbringen der Ladebrücke 401 in den Laderaum 201 in der ausgeklappten Stellung 401b zusätzliches Gewicht zu erfassen und eine Ladegewichtsinformation, die das erfasste Gewicht und/oder die erfasste Veränderung des Gewichts repräsentiert, an die Vorrichtung 1 zu senden.

Außerdem umfasst der Sattelauflieger 2 eine Kamera 105c, die eingerichtet ist, ein Bild des Laderaums 201 und/oder eines Teils des Laderaums 201 zu erfassen, und eine Bildinformation, die das erfasste Bild repräsentiert, über die Verbindung 206 an die Vorrichtung 1 zu senden. Insbesondere kann die Kamera 105c eingerichtet sein, ein Bild des Teils des Laderaums 201 zu erfassen, in den die Ladebrücke 401 in der ausgeklappten Stellung 401b zumindest teilweise eingebracht ist, und eine Bildinformation, die das erfasste Bild repräsentiert, an die Vorrichtung zu senden.

Der Sattelauflieger 2 umfasst außerdem einen Erschütterungssensor 105d, der eingerichtet ist, eine für das zumindest teilweise Einbringen der Ladebrücke 401 in den Laderaum 201 charakteristische Erschütterung zu erfassen und eine Erschütterungsinformation, die die erfasste Erschütterung repräsentiert, über die Verbindung 206 an die Vorrichtung 1 zu senden. Die Erschütterung kann beispielsweise entstehen, wenn die Ladebrücke 401 auf dem Laderaumboden 203 auftrifft. Dementsprechend ist der Erschütterungssensor 105d beispielsweise im Laderaumboden 203 in dem Bereich und/oder in der Nähe des Bereichs, in dem die Ladebrücke 401 in der ausgeklappten Stellung 401b auf dem Laderaumboden 203 aufliegt, angeordnet.

Darüber hinaus umfasst der Sattelauflieger 2 einen Bewegungssensor 105e auf, der eingerichtet ist, eine Bewegung des Sattelaufliegers 2 zu erfassen und eine Bewegungsinformation, die die erfasste Bewegung repräsentiert, über die Verbindung 206 an die Vorrichtung 1 zu senden. Insbesondere kann der Bewegungssensor 105e des Sattelaufliegers eingerichtet sein, (i) eine Rückwärtsbewegung und/oder (ii) eine Verzögerung bis zum Stillstand und/oder (iii) einen Stillstand des Sattelaufliegers 2 zu erfassen und eine entsprechende Bewegungsinformation (d.h. (i) eine Rückwärtsbewegungsinformation und/oder eine (ii) Verzögerungsinformation und/oder (iii) eine Stillstandsinformation) an die Vorrichtung 1 zu senden. Zu diesem Zweck kann der Bewegungssensor 105e einen Beschleunigungssensor und/oder einen Geschwindigkeitssensor aufweisen. Zum Beispiel ist der Bewegungssensor 105 Teil des Bremssystems des Sattelaufliegers 2.

Ferner umfasst der Sattelauflieger 2 einen Näherungssensor in Form des Abstandssensors 105f, der eingerichtet ist, einen Abstand zwischen dem Heck des Sattelaufliegers 2 und einem Objekt in der Umgebung des Sattelaufliegers, wie der Laderampe 4, zu erfassen und eine Näherungsinformation, die den erfassten Abstand repräsentiert, über die Verbindung 206 an die Vorrichtung 1 zu senden. Zu diesem Zweck ist der Abstandssensor 105f am Heck des Sattelaufliegers 2 angeordnet. Ein Beispiel für einen solchen Abstandssensor ist ein Parksensor.

Es versteht sich, dass der Sattelauflieger 2 neben den Sensoren 105a bis 105f weitere Sensoren umfassen kann. Auch kann der Sattelauflieger 2 nur einen Teil (z.B. nur ein oder zwei oder drei oder vier oder fünf) der Sensoren 105a bis 105f und/oder weitere Sensoren umfassen.

Ferner umfasst der Sattelauflieger 2 eine Benutzerschnittstelle 104, die in Fig. 2 beispielhaft als berührungsempfindlicher Bildschirm dargestellt ist. Die Benutzerschnittstelle 104 ist beispielsweise eingerichtet, eine Information in Form einer Benutzereingabe zu erfassen und die erfasste Information über die Verbindung 206 an die Vorrichtung 1 zu senden und/oder eine Information über die Verbindung 206 von der Vorrichtung zu empfangen und die empfangene Information an einen Benutzer auszugeben.

Die Verbindung 206 ist beispielsweise eine drahtgebundene Kommunikationsverbindung eines Ethernet-Netzwerks oder eines CAN-, K-Leitungs-, LIN- oder Flexray Bussystems des Sattelaufliegers 2.

Die Vorrichtung 1 und die Ladebrücke 401 können über die Kommunikationspfade 501 und 502 mit dem Server 5 kommunizieren, d.h. Informationen an den Server 5 senden und/oder vom Server 5 empfangen. Bei dem Server 5 kann es sich beispielsweise um einen Steuerungsserver und/oder einen Telematikserver und/oder einen Flottenmanagementserver handeln. Der Kommunikationspfad 501 umfasst zumindest einen drahtlosen Abschnitt. Daneben kann der Kommunikationspfad 501 weitere drahtlose und/oder drahtgebundene Abschnitte umfassen. Der Kommunikationspfad 502 umfasst beispielsweise einen oder mehrere drahtlose und/oder drahtgebundene Abschnitte.

Ferner kann auch vorgesehen sein, dass die Vorrichtung 1 und die Ladebrücke 401 über den drahtlosen Kommunikationspfad 503 direkt miteinander kommunizieren können. Zum Beispiel umfasst der drahtlose Kommunikationspfad nur einen drahtlosen Abschnitt einer lokalen drahtlosen Kommunikationstechnologie wie Bluetooth oder WLAN.

Ein Kommunikationspfad soll als drahtgebunden verstanden werden, wenn alle Abschnitte des Kommunikationspfads drahtgebunden sind; und ein Kommunikationspfad soll als drahtlos verstanden werden, wenn zumindest ein Abschnitt des Kommunikationspfads drahtlos ist. Dementsprechend kann ein drahtloser Kommunikationspfad neben zumindest einem drahtlosen Abschnitt auch einen oder mehrere drahtgebundene Abschnitte aufweisen.

Unter einem drahtlosen Abschnitt eines Kommunikationspfads soll ein Abschnitt des Kommunikationspfads verstanden werden, in dem die Kommunikation in Form drahtloser Kommunikationssignale gemäß einer drahtlosen Kommunikationstechnologie wie Bluetooth, WLAN, und/oder Mobilfunk erfolgt. Die Bluetooth-Spezifikationen sind derzeit im Internet unter www.bluetooth.org erhältlich. WLAN ist in den Standards der IEEE 802.1 1-Familie standardisiert, die derzeit im Internet unter https://www.ieee.org abgerufen werden können. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können im Internet unter https://www.3gpp.org/ abgerufen werden.

Unter einem drahtgebundenen Abschnitt eines Kommunikationspfads soll ein Abschnitt des Kommunikationspfads verstanden werden, in dem die Kommunikation in Form drahtgebundener Kommunikationssignale gemäß einer drahtgebundene Kommunikationstechnologie wie Ethernet erfolgt. Ethernet ist zum Beispiel in den Standards der IEEE-802.3-Familie spezifiziert.

Fig. 3 ist ein Flussdiagramm 300 einer Ausführungsform eines Verfahrens gemäß der Erfindung. Im Folgenden wird beispielhaft davon ausgegangen, dass das Verfahren durch die Vorrichtung 1, die Teil des in Fig. 2 dargestellten Sattelaufliegers 2 ist, ausgeführt wird.

In einem Schritt 301 wird eine Ladebrückenzustandsinformation erfasst, wobei die Ladebrückenzustandsinformation einen Zustand und/oder eine Zustandsänderung repräsentiert, der/die durch eine Sensoranordnung eines Transportfahrzeugs erfasst wird/wurde und charakteristisch dafür ist, dass eine Ladebrücke durch eine Hecköffnung in einen Laderaum des Transportfahrzeugs zumindest teilweise eingebracht ist. Zum Beispiel umfasst die Ladebrückenzustandsinformation (i) eine Ladegewichtsinformation, die in Schritt 301 über die Verbindung 206 von den Ladegewichtssensoren 105b empfangen wird und ein durch die Ladegewichtssensoren 105b erfasstes Gewicht der Beladung und/oder eine erfasste Veränderung des Gewichts der Beladung repräsentiert, und/oder (ii) eine Bildinformation, die in Schritt 301 über die Verbindung 206 von der Kamera 105c empfangen wird und die ein durch die Kamera 105c erfasstes Bild repräsentiert, und/oder (iii) eine Erschütterungsinformation, die in Schritt 301 über die Verbindung 206 von dem Erschütterungssensoren 105d empfangen und eine durch den Erschütterungssensor 105d erfasste Erschütterung repräsentiert. Wie oben offenbart, können die Ladegewichtsinformation und/oder die Bildinformation und/oder die Erschütterungsinformation jeweils Zustände und/oder Zustandsänderungen repräsentieren, die charakteristisch dafür sind, dass eine Ladebrücke durch die Hecktür 205 in den Laderaum 201 des Sattelaufliegers 2 zumindest teilweise eingebracht ist.

Zum Beispiel kann die Ladegewichtsinformationen das erfasste Gewicht der Beladung und/oder die erfasste Veränderung des Gewichts der Beladung quantitativ in Form einer Angabe des erfassten Gewichts und/oder der erfassten Veränderung des Gewichts repräsentieren; und/oder die Bildinformation kann das erfasste Bild derart repräsentieren, dass es basierend auf der Bildinformation zumindest teilweise rekonstruierbar ist; und/oder die Erschütterungsinformation, kann die erfasste Erschütterung quantitativ in Form einer Angabe des zeitlichen Verlaufs der Amplitude und/oder Frequenz der erfassten Erschütterung repräsentieren. Alternativ oder zusätzlich ist auch vorstellbar, dass die Ladegewichtsinformation das erfasste Gewicht und/oder die erfasste Veränderung des Gewichts qualitativ repräsentiert, zum Beispiel in Form einer Angabe, dass ein Gewicht und/oder eine Veränderung des Gewichts erfasst wurde, das/die einen vorgegebenen Schwellwert (der beispielsweise charakteristisch für das zumindest teilweise Einbringen der Ladebrücke 401 ist) überschreitet; und/oder dass die Bildinformation das erfasste Bild qualitativ repräsentiert, zum Beispiel in Form einer Angabe, dass ein Bild erfasst wurde, das ein Bildmerkmal enthält, das charakteristisch für das zumindest teilweise Einbringen der Ladebrücke 401 ist; und/oder dass die Erschütterungsinformation die erfasste Erschütterung repräsentiert, zum Beispiel in Form einer Angabe, dass eine Erschütterung erfasst wurde, deren Amplitude einen vorgegebener Schwellwert (der beispielsweise charakteristisch für das zumindest teilweise Einbringen der Ladebrücke 401 ist) überschreitet und/oder deren Frequenz einen vorgegebenen Schwellwert (der beispielsweise charakteristisch für das zumindest teilweise Einbringen der Ladebrücke 401 ist) über- und/oder unterschreitet.

Im Folgenden wird beispielhaft davon ausgegangen, dass in Schritt 301 eine Ladegewichtsinformation als Ladebrückenzustandsinformation erfasst wird und dass diese Ladegewichtsinformation eine Veränderung des Gewichts der Beladung repräsentiert, die für das zumindest teilweise Einbringen der Ladebrücke 401 und dem damit einhergehenden zusätzlichen auf den Ladegewichtssensoren 105b lastenden Gewicht charakteristisch ist.

In einem optionalen Schritt 302 wird eine Öffnungsinformation erfasst, wobei die Öffnungsinformation eine durch einen Öffnungssensor des Transportfahrzeugs erfasste Öffnung eines eine Hecköffnung des Transportfahrzeugs verschließendes Verschlussmittels repräsentiert. Zum Beispiel wird die Öffnungsinformation in Schritt 302 durch die Vorrichtung 1 über die Verbindung 206 von dem Türöffnungssensor 105a empfangen. Dabei repräsentiert die Öffnungsinformation den durch den Türöffnungssensor 105a erfassten Öffnungszustand der Hecktür. Zum Beispiel kann die Öffnungsinformation den erfassten Öffnungszustand der Hecktür qualitativ in Form einer Angabe, dass erfasst wurde, dass die Hecktür geöffnet oder geschlossen ist, repräsentieren.

In einem optionalen Schritt 303 wird zumindest eine weitere Information erfasst, wobei die weitere Information einen durch einen Nutzfahrzeugsensor des Transportfahrzeugs erfassten Zustand und/oder eine durch einen Nutzfahrzeugsensor des Transportfahrzeugs erfasste Zustandsänderung repräsentiert.

Bei der weiteren Information kann es sich beispielsweise um eine Bewegungsinformation wie (i) eine Rückwärtsbewegungsinformation und/oder eine (ii) Verzögerungsinformation und/oder (iii) eine Stillstandsinformation handeln, die eine durch den Bewegungssensor 105e erfasste Bewegung repräsentiert. Zum Beispiel wird eine solche Bewegungsinformation in Schritt 303 durch die Vorrichtung 1 über die Verbindung 206 von dem Bewegungssensor 105e empfangen. Die Bewegungsinformation(en) kann/können die erfasste Bewegung beispielsweise qualitativ in Form einer Angabe, dass (i) eine Rückwärtsbewegung und/oder eine (ii) Verzögerung und/oder (iii) ein Stillstand des Sattelaufliegers 2 erfasst wurde, repräsentieren. Alternativ kann/können die erfasste Bewegung durch die Bewegungsinformation(en) auch quantitativ in Form einer/mehrerer Angabe(n) einer/mehrerer erfassten/r Geschwindigkeit(en) und/oder Beschleunigung(en) und/oder Verzögerung(en) sowie der jeweils erfassten Bewegungsrichtung repräsentiert werden.

Alternativ oder zusätzlich kann es sich bei der weiteren Information auch um eine Positionsinformation handeln, die eine durch den Positionssensor 105g erfasste Position repräsentiert. Der Positionssensor 105g ist beispielsweise ein Sensor eines Globalen-Satelliten-Navigationssystems, der eingerichtet ist, eine Position basierend auf erfassten Navigationssignalen des Globalen-Satelliten-Navigationssystems zu bestimmen. Dementsprechend kann eine solche Positionsinformation die erfasste Position in Form von Koordinaten des Globalen-Satelliten-Navigationssystems (z.B. GPS-Koordinaten) repräsentieren. Bei der Position handelt es sich um die Position des Sattelaufliegers 2, da der Positionssensor 105g Teil der Vorrichtung 1 und somit des Sattelaufliegers 2 ist.

Es versteht sich, dass die Erfindung nicht auf die in den optionalen Schritten 302 und 303 erfassten Informationen beschränkt ist. Ferner erfordert die Erfindung kein Erfassen solcher Informationen. Es handelt sich lediglich um optionale Schritte. Im Folgenden wird jedoch beispielhaft davon ausgegangen, dass in Schritt 302 eine Öffnungsinformation und in Schritt 303 sowohl eine Bewegungsinformation als auch eine Positionsinformation erfasst wird.

Die Schritte 301, 302 und 303 können gleichzeitig, wie in Fig. 3 dargestellt, oder in einer beliebigen anderen Reihenfolge erfolgen.

In einem Schritt 304 wird unter Berücksichtigung der Ladebrückenzustandsinformation und, optional, der Öffnungsinformation und der weiteren Information bestimmt, dass die Ladebrücke durch die Hecköffnung in den Laderaum des Transportfahrzeugs zumindest teilweise eingebracht ist.

Das Bestimmen in Schritt 304 kann beispielsweise anhand vorgegebener Regeln (z.B. einem vorgegebenem Algorithmus) erfolgen. Die Regeln geben beispielsweise vor, unter welchen Bedingungen bestimmt wird, dass die Ladebrücke 401 durch die Hecköffnung 205 in den Laderaum 201 des Sattelaufliegers 2 zumindest teilweise eingebracht ist.

Zum Beispiel können die Regeln vorsehen, dass eine Bedingung dafür, dass bestimmt wird, dass die Ladebrücke 401 durch die Hecköffnung 205 in den Laderaum 201 des Sattelaufliegers 2 zumindest teilweise eingebracht ist, ist, dass der durch die Ladebrückenzustandsinformation repräsentierte Zustand und/oder die dadurch repräsentierte Zustandsänderung charakteristisch dafür ist (z.B. angibt oder mit hoher Wahrscheinlichkeit darauf hindeutet), dass die Ladebrücke 401 durch die Hecköffnung 205 in den Laderaum 201 des Sattelaufliegers 2 zumindest teilweise eingebracht ist. Zum Beispiel kann vorgesehen sein, dass nur dann, wenn die folgenden Bedingungen (i) bis (iv) erfüllt sind, bestimmt wird, dass die Ladebrücke 401 durch die Hecköffnung 205 in den Laderaum 201 des Sattelaufliegers 2 zumindest teilweise eingebracht ist:
(i) die in Schritt 301 als Ladebrückenzustandsinformation erfasste Ladegewichtsinformation repräsentiert eine Veränderung des Gewichts der Beladung, die für das zumindest teilweise Einbringen der Ladebrücke 401 und dem damit einhergehenden zusätzlichen auf den Ladegewichtssensoren 105b lastenden Gewicht charakteristisch ist, zum Beispiel indem sie einen vorgegebenen Schwellwert überschreitet;
(ii) die in Schritt 302 erfasste Öffnungsinformation gibt an, dass erfasst wurde, dass die Hecktür geöffnet ist;
(iii) die in Schritt 303 erfasste Bewegungsinformation repräsentiert eine Rückwärtsbewegung mit einer Verzögerung bis zum Stillstand;
(iv) die in Schritt 303 erfasste Positionsinformation repräsentiert eine Position, die sich innerhalb eines vorgegebenen geographischen Bereichs und/oder eines vorgegebenen Abstands (z.B. 50m oder 30m oder 10m) um die geographische Position der Laderampe 4 befindet.

Zum Beispiel wird davon ausgegangen, dass sich der Sattelauflieger 2 mit (ausreichend) hoher Wahrscheinlichkeit an der Laderampe 4 befindet und die laderampenseitigen Ladebrücke 401 zumindest teilweise in den Laderaum 201 eingebracht ist, wenn diese Bedingungen (i) bis (iv) erfüllt sind. Es versteht sich, dass die Erfindung nicht auf diese Bedingungen beschränkt ist. Vielmehr ist ebenfalls denkbar, dass andere Bedingungen und/oder nur ein Teil dieser Bedingungen (i) bis (iv) im Rahmen des Bestimmens angewendet werden.

Wenn das Bestimmen in Schritt 304 ergibt, dass die Ladebrücke durch die Hecköffnung in den Laderaum des Transportfahrzeugs zumindest teilweise eingebracht ist, wird das Flussdiagramm 300 mit einem Schritt 306 fortgesetzt. Andernfalls startet das Flussdiagramm 300 erneut.

Im Schritt 306 wird zumindest eine der folgenden Aktionen ausgeführt: (i) Benachrichtigen einer entfernten Vorrichtung und/oder (ii) Aktivieren eines Blockierens von Stützwinden des Transportfahrzeugs und/oder (iii) Aktivieren eines Blockierens einer Höhenverstellung des Transportfahrzeugs und/oder (iv) Aktivieren einer Anfahrvermeidungsfunktion des Transportfahrzeugs.

Bei dem Blockieren der Stützwinden des Transportfahrzeugs und/oder dem Blockieren der Höhenverstellung des Transportfahrzeugs und/oder der Anfahrvermeidungsfunktion des Transportfahrzeugs handelt es sich beispielsweise um Funktionen des Sattelaufliegers 2. Das Blockieren der Stützwinden und/oder der Höhenverstellung ist beispielsweise eingerichtet, eine Verwendung der Stützwinden und/oder der Höhenverstellung zu verhindern, solange das Blockieren der Stützwinden und/oder der Höhenverstellung aktiviert ist.

Die Anfahrvermeidungsfunktion ist beispielsweise eingerichtet, ein unbeabsichtigtes Anfahren des Sattelaufliegers 2 zu vermeiden, indem sie beispielsweise das Weiterfahren verhindert und/oder versucht die Aufmerksamkeit des Fahrers des Zugfahrzeugs 3 zu erregen, falls der Sattelauflieger 2 in Bewegung gesetzt wird. Zum Beispiel kann die Anfahrvermeidungsfunktion eine Bremsaktion und/oder eine Anfahrvermeidungsaktion bewirken, wenn der Bewegungssensor 105e eine Bewegung des Sattelaufliegers 2 in Vorwärtsrichtung erfasst, solange die Anfahrvermeidungsfunktion aktiviert ist. Die Anfahrvermeidungsfunktion ist beispielsweise so lange aktiviert wie die o.g. Bedingungen (i) bis (iv) erfüllt sind. Zum Beispiel umfasst die Bremsaktion zumindest ein Abbremsen von Rädern des Sattelaufliegers 2 wie ein dauerhaftes Blockieren und/oder ein ein- oder mehrmaliges Abbremsen (z.B. in Form einer Teillastbremsung und/oder Stotterbremsung) von Rädern des Sattelaufliegers 2. Zum Beispiel umfasst die Warnaktion ein Ausgeben eines Warnsignals durch die Benutzerschnittstelle 104.

Die entfernte Vorrichtung kann beispielsweise der Server 5 sein; und die Nachricht kann beispielsweise über den drahtlosen Kommunikationspfad 501 an den Server 5 gesendet werden. Dies ist beispielsweise vorteilhaft, um einen Disponenten zu informieren, dass aktuell ein Ent- und/oder Beladungsvorgang läuft.

Das zumindest teilweise Einbringen der Ladebrücke 401 durch die Hecköffnung 205 in den Laderaum 201 des Sattelaufliegers 2 ist charakteristisch für einen laufenden Ent- und/oder Beladungsvorgang des Sattelaufliegers 2. Um einen solchen laufenden Ladevorgang nicht zu stören und/oder zu unterbrechen, kann es vorteilhaft sein, die Stützwinden des Sattelaufliegers 2 und/oder die Höhenverstellung des Sattelaufliegers 2 zu blockieren und/oder das Anfahren des Sattelaufliegers 2 zu vermeiden. Durch das Benachrichtigen des Servers 5, kann diese darüber informiert werden, dass die Ladebrücke 401 durch die Hecköffnung 205 in den Laderaum 201 des Sattelaufliegers 2 zumindest teilweise eingebracht ist und/oder dass ein Ent- und/oder Beladungsvorgang läuft.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren, umfassend:
- Erfassen (301) einer Ladebrückenzustandsinformation, wobei die Ladebrückenzustandsinformation einen Zustand und/oder eine Zustandsänderung repräsentiert, der/die durch eine Sensoranordnung eines Transportfahrzeugs (2) erfasst wird/wurde und charakteristisch dafür ist, dass eine Ladebrücke (401) durch eine Hecköffnung (205) in einen Laderaum (201) des Transportfahrzeugs (2) zumindest teilweise eingebracht ist;
- Bestimmen (304), unter Berücksichtigung der Ladebrückenzustandsinformation, dass die Ladebrücke (401) durch die Hecköffnung (205) in den Laderaum (201) des Transportfahrzeugs (2) zumindest teilweise eingebracht ist;
- wenn bestimmt wird, dass die Ladebrücke (401) durch die Hecköffnung (205) in den Laderaum (201) des Transportfahrzeugs (2) zumindest teilweise eingebracht ist, (305, 306) (i) Benachrichtigen einer entfernten Vorrichtung und/oder (ii) Aktivieren eines Blockierens von Stützwinden des Transportfahrzeugs (2) und/oder (iii) Aktivieren eines Blockierens einer Höhenverstellung des Transportfahrzeugs (2) und/oder (iv) Aktivieren einer Anfahrvermeidungsfunktion.

2. Verfahren nach Anspruch 1, wobei die Ladebrücke (401) eingerichtet ist, um durch die Hecköffnung (205) in den Laderaum (201) des Transportfahrzeugs (2) zumindest teilweise eingebracht, insbesondere ausgeklappt und/oder ausgefahren, zu werden.

3. Verfahren nach einem der Ansprüche 1 und 2, wobei die Sensoranordnung zumindest einen der folgenden Sensoren umfasst:
- einen Erschütterungssensor (105d), der eingerichtet ist, eine für das zumindest teilweise Einbringen der Ladebrücke (401) charakteristische Erschütterung zu erfassen; und/oder
- einen Bildsensor (105c), der eingerichtet ist, ein für das zumindest teilweise Einbringen der Ladebrücke (401) charakteristisches Bild und/oder Bildmerkmal zu erfassen; und/oder
- eine Lichtschrankenanordnung; und/oder
- einen Gewichtssensor (105b); und/oder
- einen Kontakt- und/oder Näherungssensor.

4. Verfahren nach einem der Ansprüche 1 bis 3, wobei das Verfahren ferner umfasst:
- Erfassen einer Rückwärtsbewegungsinformation, die eine durch einen Bewegungssensor (105e) des Transportfahrzeugs (2) erfasste Rückwärtsbewegung des Transportfahrzeugs (2) repräsentiert; und/oder
- Erfassen einer Verzögerungsinformation, die eine durch den Bewegungssensor (105e) des Transportfahrzeugs (2) erfasste Verzögerung des Transportfahrzeugs (2), insbesondere eine Verzögerung bis zum Stillstand, repräsentiert; und/oder
- Erfassen einer Stillstandinformation, die einen durch den Bewegungssensor (105e) des Transportfahrzeugs (2) erfassten Stillstand des Transportfahrzeugs (2) repräsentiert; und/oder
- Erfassen einer Öffnungsinformation, die eine durch einen Öffnungssensor (105a) des Transportfahrzeugs (2) erfasste Öffnung eines die Hecköffnung (205) verschließenden Verschlussmittels, insbesondere einer Hecktür und/oder eines Heckrolltors, des Transportfahrzeugs (2) repräsentiert; und/oder
- Erfassen einer Positionsinformation, die eine durch einen Positionssensor (105g) des Transportfahrzeugs (2) erfasste Position des Transportfahrzeugs (2) repräsentiert; und/oder
- Erfassen einer Näherungsinformation, die eine durch einen Näherungssensor (105f) des Transportfahrzeugs (2) erfasste Annäherung eines Hecks des Transportfahrzeugs (2) an eine Laderampe (4) repräsentiert.

5. Verfahren nach Anspruch 4, wobei das Bestimmen, dass die Ladebrücke (401) durch die Hecköffnung (205) in den Laderaum (201) des Transportfahrzeugs (2) zumindest teilweise eingebracht ist, unter Berücksichtigung (i) der Rückwärtsbewegungsinformation und/oder (ii) der Verzögerungsinformation und/oder (iii) der Stillstandinformation und/oder (iv) der Öffnungsinformation und/oder (v) der Positionsinformation und/oder (vi) der Annäherungsinformation erfolgt.

6. Verfahren nach einem der Ansprüche 1 bis 5, wobei das Bestimmen, dass die Ladebrücke (401) durch die Hecköffnung (205) in den Laderaum (201) des Transportfahrzeugs (2) zumindest teilweise eingebracht ist, durch eine Steuereinheit, insbesondere eine Telematikeinheit, des Transportfahrzeugs (2) durchgeführt wird.

7. Verfahren nach einem der Ansprüche 1 bis 6, wobei die Benachrichtigung der entfernten Vorrichtung umfasst:
- Senden einer Nachricht über einen drahtlosen Kommunikationspfad an die entfernte Vorrichtung.

8. Verfahren nach Anspruch 7, wobei die Nachricht eine Angabe, dass die Ladebrücke durch die Hecköffnung (205) in den Laderaum (201) des Transportfahrzeugs (2) zumindest teilweise eingebracht ist, enthält oder repräsentiert.

9. Verfahren nach einem der Ansprüche 1 bis 8, wobei die Anfahrvermeidungsfunktion umfasst:
- Erfassen eines Zustands und/oder einer Zustandsänderung, der/die charakteristisch für (i) ein Anfahren des Transportfahrzeugs (2) und/oder (ii) ein bevorstehendes Anfahren des Transportfahrzeugs (2) ist;
- wenn ein Zustand und/oder eine Zustandsänderung erfasst wird, der/die charakteristisch für (i) ein Anfahren des Transportfahrzeugs (2) und/oder (ii) ein bevorstehendes Anfahren des Transportfahrzeugs ist, Bewirken einer Anfahrvermeidungsaktion.

10. Verfahren nach einem der Ansprüche 1 bis 9, wobei die Anfahrvermeidungsaktion umfasst:
- eine Bremsaktion; und/oder
- eine Warnaktion.

11. Verfahren nach Anspruch 10, wobei die Bremsaktion zumindest ein Abbremsen von Rädern des Transportfahrzeugs (2) umfasst; und/oder die Warnaktion ein Ausgeben eines Warnsignals umfasst.

12. Verfahren nach einem der Ansprüche 1 bis 11, wobei das Transportfahrzeug (2) eines der folgenden Fahrzeuge ist:
- ein Nutzfahrzeuggespann umfassend ein Zugfahrzeug (3) und einen Nutzfahrzeuganhänger (2),
- ein Nutzfahrzeuganhänger, insbesondere ein Sattelauflieger (2).

13. Computerprogramm umfassend Programmanweisungen, die dazu ausgebildet sind, bei Ausführung durch mindestens einen Prozessor einer Vorrichtung, die Vorrichtung zu veranlassen, das Verfahren nach einem der Ansprüche 1 bis 12 auszuführen.

14. Vorrichtung umfassend Mittel (100 - 105) eingerichtet zur Ausführung des Verfahrens nach einem der Ansprüche 1 bis 12.

15. Vorrichtung nach Anspruch 14, wobei die Vorrichtung ein Transportfahrzeug (2) oder ein Teil des Transportfahrzeugs (2) ist.
